# EUROPÄISCHE PATENTSCHRIFT

(11) **EP 3 546 413 B1**
(45) Veröffentlichungstag und Bekanntmachung des Hinweises auf die Patenterteilung: **18.01.2023**
(21) Anmeldenummer: 19164712.2
(22) Anmeldetag: 22.03.2019
(51) Int. Cl.: B66C 23/20, F03D 13/10

(54) **SYSTEM UND VERFAHREN ZUM ANHEBEN UND ABSENKEN VON LASTEN AN EINER WINDENERGIEANLAGE**
SYSTEM AND METHOD FOR LIFTING AND LOWERING LOADS ON A WIND ENERGY TURBINE
SYSTÈME ET PROCÉDÉ DE LEVAGE ET D'ABAISSEMENT DES CHARGES SUR UNE ÉOLIENNE

(30) Priorität: 22.03.2018 DE 202018101621 U
(43) Veröffentlichungstag der Anmeldung: 02.10.2019
(73) Patentinhaber: Nordex Energy SE & Co. KG, 22419 Hamburg (DE)
(72) Erfinder: HARICH, Martin, 25436 Tornesch (DE); WOLFF, Marc, 22397 Hamburg (DE)
(74) Vertreter: Hauck Patentanwaltspartnerschaft mbB

(56) Entgegenhaltungen:
- US-A1- 2010 005 656
- US-A1- 2014 263 141
- US-A1- 2015 233 341

## Beschreibung

Die vorliegende Erfindung betrifft ein System und ein Verfahren zum Anheben und Absenken von Lasten an einer Windenergieanlage. Windenergieanlagen sind häufig mit einem in der Gondel angeordneten Kran ausgestattet. Der Kran dient dazu, Komponenten, die in der Gondel montiert werden sollen, vom Boden in die Gondel zu heben. Auch kommt der Kran zum Einsatz, wenn defekte Komponenten aus der Gondel zum Boden abgesenkt werden sollen.

Aus EP 1 101 934 A2 ist eine Windkraftanlage bekannt geworden, deren auf einem Turm der Anlage gelagertes Maschinengehäuse einen radial vom Turm abstehenden Gehäuseteil aufweist, der eine Öffnung im Boden des Maschinengehäuses besitzt. Ein Bordkran ist an dem Maschinengehäuse befestigt, mit dem sich eine am Boden stehende Last lotrecht anheben lässt.

Aus WO 2004/022970 A1 ist ein Verfahren und eine Vorrichtung zum Anheben und Absenken von Lasten in Verbindung mit einer Windenergieanlage oder mit vergleichbaren Strukturen bekannt geworden. Ein mit der anzuhebenden Last verbundenes Hebezeug wird hierbei mit angehoben.

Aus WO 2017/060825 A1 ist ein System und ein Verfahren zum Anheben und Absenken von Lasten an einer Windenergieanlage bekannt. Das System besteht aus einem Hubseil, das über eine Umlenkeinrichtung an der Gondel der Windenergieanlage geführt ist und über eine am Boden stehenden Winde betätigt wird. Das Hubseil wird hierbei am Mastfuß umgelenkt und hebt eine Last lotrecht an. Zur Stabilisierung beim Anheben der Last sind zwei Leitseile vorgesehen, von denen jeweils eines von einer Bedienperson betätigt wird. Die Leitseile verhindern ein Schaukeln der angehobenen Last.

Aus WO2014/071949 A1 ist ein sich selbsterrichtender Kran (Self Hoisting Crane) bekannt geworden, der über ein doppelt geführtes Seil in die Gondel der Windenergieanlage gezogen und dort dann aufgerichtet wird.

Aus US 2010/005656 A1 ist ein Verfahren zum Tausch einer Rotornabe an einer Windenergieanlage bekannt geworden. Hierzu wird in einigem Abstand vom Turm der Windenergieanlage eine Winde auf dem Boden aufgestellt, die über ein Seil die Rotornabe beim Anheben aus der Horizontalen auslenkt.

Der Erfindung liegt die Aufgabe zugrunde, das Anheben und Absenken von Lasten an Windenergieanlagen weiter zu verbessern.

Erfindungsgemäß wird die Aufgabe durch eine Vorrichtung mit den Merkmalen aus Anspruch 1 und ein Verfahren mit den Merkmalen aus Anspruch 14 gelöst.

Vorteilhafte Ausgestaltungen bilden die Gegenstände der Unteransprüche. Gegenstand der Erfindung ist ein System zum Anheben und Absenken von Lasten an einer Windenergieanlage. Eine Windenergieanlage besitzt einen Turm und eine auf dem Turm angeordnete Gondel mit einem Kran. Der Turm besitzt eine Freihubhöhe, bis zu der der Turm einen so großen Durchmesser besitzt, derart, dass eine von dem Kran lotrecht abgesenkte Last mit der Außenwand des Turms kollidiert. Eine solche Freihubhöhe tritt immer dann an dem Turm einer Windenergieanlage auf, wenn der Kran in der Gondel der Windenergieanlage keine so große Reichweite besitzt, dass eine lotrecht angehobene oder abgesenkte Last ohne Berührung der Außenwand des Turms vom Boden aufwärts zur Gondel oder von der Gondel abwärts bis zum Boden bewegt werden kann. Das erfindungsgemäße System ist mit einer Schrägzugeinrichtung ausgestattet. Die Schrägzugeinrichtung besitzt eine motorische Winde für ein Leitseil. Bei einem Betrieb des Krans zum Anheben oder Absenken einer Last wird die motorische Winde mit dem Leitseil betrieben, um die Last über das Leitseil in einer Höhe unterhalb der Freihubhöhe aus seiner lotrechten Position unterhalb des Krans auszulenken. An dem System ist vorteilhaft, dass mit Hilfe des Leitseils und der motorischen Winde, eine Last aus der lotrechten Position (Vertikalen) ausgelenkt werden kann. Im Vergleich zu einem Hubseil, das ausgelegt ist, eine Last lotrecht anzuheben oder abzusenken, ist ein Leitseil für eine deutlich geringere Belastung im Sinne einer geringeren Zugkraft ausgelegt.

Erfindungsgemäß sind folgende Messeinrichtungen vorgesehen:
- ein an der Last angebrachter Abstandssensor, der den Abstandswert der Last zur Außenwand des Turms erfasst und/oder
- ein Höhensensor, der den Höhenwert der Last über den Grund erfasst.

Der Abstandssensor erleichtert die Kontrolle eines ausreichenden Turmabstandes der Last. Insbesondere bei schwierigen Sichtverhältnissen oder auch bei schwierigen Windverhältnissen kann der Abstandssensor unterstützend wirken. Bevorzugt wird eine Ultraschall- oder Infrarotsensor vorgesehen, es sind aber auch Radar- oder Lidar-Sensoren möglich.

Ebenfalls erfinderisch ist eine erste Steuerung für die motorische Winde vorgesehen, die abhängig von dem erfassten Abstandswert, die motorische Winde ansteuert. Zusätzlich kann die erste Steuerung auch die motorische Winde entsprechend der erfassten Zugkraft an dem Leitseil ansteuern. Durch das Ansteuern der motorischen Winde kann beispielsweise der Abstand der Last von der Außenwand des Turms vergrößert werden, indem die Last vom Turm weggezogen wird. Hierbei ist zu berücksichtigen, dass nicht unbedingt eine exakte Erfassung der Position der Last im Raum erforderlich ist. Für eine zuverlässige Steuerung kann bereits ausreichen, dass, wenn ein abnehmender Abstand der Last zur Außenwand des Turms festgestellt wird, die Zuggeschwindigkeit oder Zugkraft der motorischen Winde erhöht wird, um den Abstand zu vergrößern. Auch ist es möglich, den erfassten Abstandswert mit einem Grenzwert für einen Mindestabstand zu vergleichen und bei einem Unterschreiten des Mindestabstands die motorische Winde einzuschalten und wieder auszuschalten sobald ein größerer Abstand erreicht wurde. Zusätzlich zu dem Abstandswert hat sich die in das Leitseil eingebrachte Zugkraft als besonders vorteilhafter Messwert erwiesen, da so mit einfachen Mitteln zuverlässig eine Kollision mit dem Turm verhindert wird.

Ein Höhensensor kann vorgesehen sein, der einen Höhenwert der

Last über Grund, beispielsweise in Form der Länge des abgelassenen Hubseiles, erfasst und bereitstellt, so dass hiervon ausgehend die erforderliche Auslenkung der Last aus der Vertikalen berechnet werden kann, um eine Kollision mit der Außenwand des Turms zu vermeiden. Die erste Steuerung für die motorische Winde steuert dann abhängig von dem erfassten Höhenwert der Last derart, dass sich am Leitseil die erforderliche Zugkraft/Zuggeschwindigkeit einstellt. Als Höhensensor kann ein optischer Sensor, ein Ultraschallsensor oder ein Infrarotsensor vorgesehen sein, der an der Last angebracht ist oder auf dem Boden steht.

Bevorzugt wird eine Umlenkrolle eingesetzt, wodurch eine Auslenkung der Last besonders einfach und zuverlässig möglich ist, wenn das Leitseil über eine Umlenkrolle an der Last geführt ist und nur an einem Ende über eine motorische Winde betätigt wird. Das über die Umlenkrolle geführte Leitseil bildet zwei Stränge. Die Verwendung der Umlenkrolle führt dazu, dass die motorische Winde an dem Leitseil die doppelte Zugkraft entwickelt und zugleich durch die Halbierung der Geschwindigkeit feinfühliger gesteuert werden kann. Die Umlenkrolle wird bevorzugt dann eingesetzt, wenn eine aufzubringende Zugkraft nicht allein von der motorischen Winde aufgebracht werden kann. Die Verwendung eines fest mit der Last verbundenen Leitseils, das zwei Stränge besitzt, die jeweils von einer Person betätigt werden, erfordert eine deutlich höhere Koordination untereinander.

In einer weiteren bevorzugten Ausgestaltung ist eine Kraftmesseinrichtung für das Leitseil vorgesehen, die eine an dem Leitseil wirkende Zugkraft erfasst. Die motorische Winde wird bevorzugt entsprechend der für das Leitseil gemessenen Zugkraft derart angesteuert, dass eine konstante Zugkraft an dem Leitseil vorliegt. Dieser Schritt beruht auf der Feststellung, dass durch eine gemessene Zugkraft ein ausreichender Abstand der Last zum Turm zuverlässig sichergestellt werden kann. Die Messung der Zugkraft kann einfach und direkt am Leitseil erfolgen und braucht keine aufwendige Messanordnung. Bevorzugt wirkt unterhalb der Freihubhöhe eine konstante Zugkraft an dem Leitseil. Alternativ oder zusätzlich kann die Zugkraft auch abhängig von der Höhe der Last über dem Boden aufgebracht werden.

In einer bevorzugten Weiterbildung der Erfindung ist ein erster Rahmen für die motorische Winde vorgesehen, an dem die motorische Winde angebracht ist. Mit dem ersten Rahmen wird die motorische Winde in einer gewünschten Position relativ zu dem Turm festgelegt. Mit Hilfe des leicht zu transportierenden ersten Rahmens ist es möglich, die motorische Winde in die gewünschte Position zu bringen und dort mit ihr zu arbeiten. Der Einsatz von Befestigungsmitteln wie beispielsweise Ballast, Ankereinrichtungen und/oder einer Verbindung mit einer festen Struktur erleichtert die Verwendung des ersten Rahmens und stellt sicher, dass dieser auch unter Belastung durch die Schrägzugeinrichtung nicht seine Position ändert. Bevorzugt besitzt der erste Rahmen eine U-Form, wobei die motorische Winde zwischen den beiden Schenkeln der U-Form angeordnet ist. Zur Unterstützung kann ein Versteifungsprofil zwischen den beiden Schenkeln der U-Form angebracht sein. Der so ausgebildete erste Rahmen für die motorische Winde ist ausreichend stabil und erlaubt den flexiblen Einsatz im Gelände.

In einer bevorzugten Weiterbildung der Erfindung ist ein zweiter Rahmen vorgesehen, wobei der zweite Rahmen für das Ende des Leitseils ein Befestigungsmittel aufweist, wie beispielsweise eine Öse oder ein Zapfen zur Befestigung des Leitseils. Auch der zweite Rahmen kann in einer gewünschten Position relativ zu dem Turm und/oder zu dem ersten Rahmen festgelegt werden. In einer Ausgestaltung mit zwei separaten Rahmen für die motorische Winde und das Befestigungsmittel ist es möglich, diese relativ zum Turm der Windenergieanlage zu positionieren und jeweils dort mit Hilfsmitteln zu fixieren.

Neben der vorstehenden Verwendung von zwei separaten Rahmen für die motorische Winde und das Befestigungsmittel kann auch ein gemeinsamer Rahmen vorgesehen sein, an dem die motorische Winde und das Befestigungsmittel befestigt sind. Die Verwendung eines solchen gemeinsamen Rahmens besitzt den Vorteil, dass, beispielsweise bei unwegsamem Gelände, nur ein Rahmen positioniert und fixiert werden muss.

In einer bevorzugten Weiterbildung können auch Bodenbefestigungsmittel vorgesehen sein. Bodenfestigungsmittel können beispielsweise Erdnägel oder auch Schraubanker sein. Die Bodenbefestigungsmittel können zusätzlich oder ausschließlich zur Befestigung dienen, beispielsweise das Befestigungsmittel für das Leitseil bilden.

In einer weiter bevorzugten Ausgestaltung erfasst eine zweite Steuerung für den Kran die Hebe- und/oder Senkgeschwindigkeit der Last/des Hubseils. Entsprechend der erfassten Hebe- und/oder Senkgeschwindigkeit der Last/des Hubseils, kann über die erste Steuerung die motorische Winde für das Leitseil angesteuert und betätigt sowie die Zuggeschwindigkeit oder Zugkraft der motorischen Winde variiert werden.

In einer weiteren Ausgestaltung kann eine dritte Steuerung vorgesehen sein, die, abhängig von dem erfassten Abstandswert der Last zur Außenwand des Turms, der erfassten Hebe- und/oder Senkgeschwindigkeit der Last/des Hubseils und/oder dem erfassten Höhenwert der Last über Grund, der ersten Steuerung für die motorische Winde und/oder der zweiten Steuerung für den Kran ein Steuersignal vorgibt. Die dritte Steuerung kann auch ausschließlich abhängig von der erfassten Zugkraft an dem Leitseil die motorische Winde und/oder den Kran ansteuern.

Auch die zweite Steuerung für den Kran kann der ersten Steuerung für die motorische Winde Steuersignale vorgeben, so dass die auslenkende Zugkraft auf die Last im oberen Turmabschnitt (steiler Winkel des Leitseils), wenn keine oder eine geringe Auslenkung erforderlich ist, auch gering ist und im unteren Turmabschnitt (flacher Winkel des Leitseils, maximal horizontal), wenn die Auslenkung größer sein muss (Turm unten am dicksten) auch tatsächlich größer ist. Hier kann die zweite Steuerung des Krans als Master für die erste Steuerung der motorischen Winde konfiguriert werden. Grundsätzlich funktioniert eine solche Master/Follower-Steuerung auch mit der ersten Steuerung als Master.

Bei der Verwendung einer Umlenkrolle kann die Orientierung einer unsymmetrischen Last durch eine Positionierung der Umlenkrolle an der Last festgelegt werden. Ziel ist es, die Seite der Last, die den geringsten Überhang aufweist (geringster Abstand der Außenkontur der Last zum Schwerpunkt der Last), zum Turm hin zu orientieren, um mit einer minimalen Auslenkung auszukommen. Auch können zwei kurze Hilfsseile an der Last angebracht und miteinander verbunden werden, so dass dann das Leitseil fest oder lose an der Verbindung der beiden Hilfsseile angeordnet werden kann.

Grundsätzlich gibt es 3 verschiedene Verfahren, um bei der Verwendung einer Umlenkrolle das Leitseil mit der Last zu verbinden:
- Mit dem Hubseil wird das Leitseil in die Gondel hochgezogen, dort in die Umlenkrolle eingeschert, durchgezogen und ein Ende des Leitseils aus der Gondel abgelassen, wodurch zwei Stränge des Leitseils entstehen.
- Das Leitseil wird in einem Seilsack (oder auf einer Trommel) beispielsweise mit dem Kran, in die Gondel gehoben, dann in die Umlenkrolle eingeschert und die beiden Stränge des Leitseils an der Gondel abgelassen.
- Das Leitseil wird am Boden in die Umlenkrolle eingeschert, ein Ende des Leitseils am zweiten Rahmen befestigt und dann die Umlenkrolle mit dem Hubseil in die Gondel hochgezogen. Beim Hochziehen wird dann automatisch das Leitseil aus dem Seilsack gezogen. Um die Umlenkrolle gefahrlos vom Hubseil trennen und an der Last befestigen zu können, wird ein weiteres Anschlagmittel benötigt, das an der Umlenkrolle befestigt ist. Wenn die Umlenkrolle mit den beiden Strängen des Leitseils (die jeweils bis zum Boden reichen und damit mit bis zu fast 200m Länge ein erhebliches Gewicht aufweisen) in der Gondel angekommen ist, verbleibt sie zunächst am Hubseil. Ein weiteres Anschlagmittel wird mit der Last verbunden. Sobald diese Verbindung hergestellt ist, wird das Hubseil entlastet und das Leitseil hängt über die Umlenkrolle an der Last.

Wird keine Umlenkrolle verwendet, so kann das Leitseil fest an der an der Last angeschlagen sein und der freie Strang kann über die motorische Winde die Last aus der Vertikalen ziehen.

Ein bevorzugtes Ausführungsbeispiel wird nachfolgend näher erläutert.

Es zeigen:
- Fig. 1: eine Windenergieanlage mit einem Kran in einer schematischen Ansicht beim Hochziehen eines Leitseils,
- Fig. 2: eine Draufsicht auf die Windenergieanlage zur Veranschaulichung der Freihubhöhe,
- Fig. 3: ein System zum Absenken einer Last mit Hilfe des Leitseils,
- Fig. 4: einen Rahmen zur Halterung der motorischen Winde und
- Fig. 5: ein am Boden abgesetztes Getriebe in einer schematischen Ansicht von der Seite.

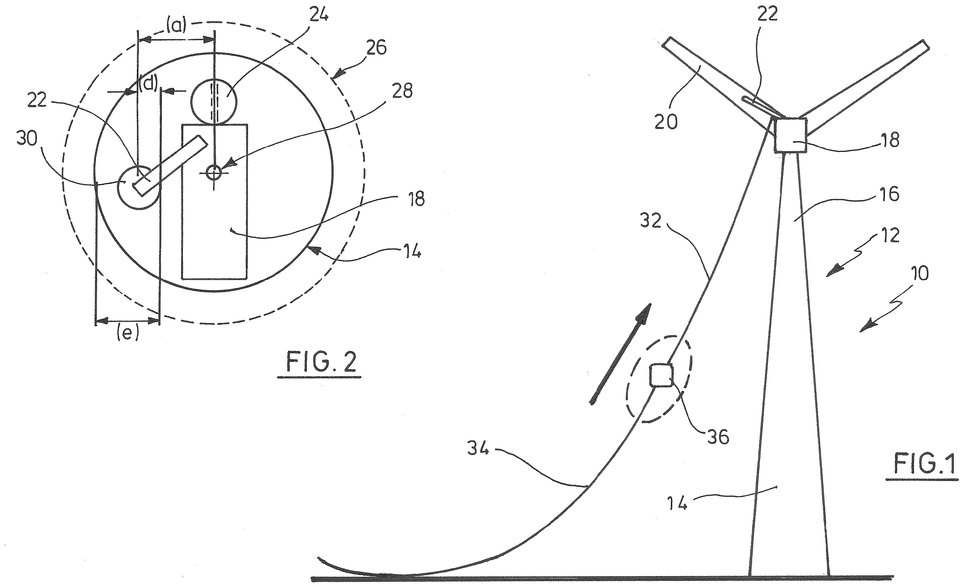

Fig. 1 zeigt eine Windenergieanlage 10, die einen Turm 12 aufweist, dessen Durchmesser mit der Höhe abnimmt. Fig. 1 zeigt ferner eine Gondel 18, die um die Längsachse 28 des Turms 12 drehbar auf diesem angeordnet ist. Die Gondel 18 trägt den Triebstrang (nicht dargestellt) der Windenergieanlage 10 zusammen mit der Rotornabe 24 (nicht dargestellt), an der die Rotorblätter 20 befestigt sind. Aus der Gondel 18 steht ein Kranarm 22 für das Anheben und Absenken von Lasten bereit. Der Kranarm 22 kann Teil eines Self Hoisting Crane (SHC) sein. Der Kranarm 22 ist dazu vorgesehen, Komponenten der Windenergieanlage, wie beispielsweise Getriebe, Welle, Generator und Umrichter, aus der Gondel 18 abzusenken und wieder anzuheben. Die in diesem besonderen Ausführungsbeispiel gezeigte Windenergieanlage 10 kann beispielsweise einen als Hybridturm ausgebildeten Turm 12 besitzen, wobei der Turm 12 beispielsweise einen unteren Turmabschnitt 14 besitzt, der aus Beton besteht und einen oberen Turmabschnitt 16, der aus Stahl hergestellt ist. Die Erfindung ist aber nicht auf diese sogenannten Hybridtürme beschränkt, sondern kann bei jedem Turmtyp und jedem Turmmaterial zum Einsatz kommen.

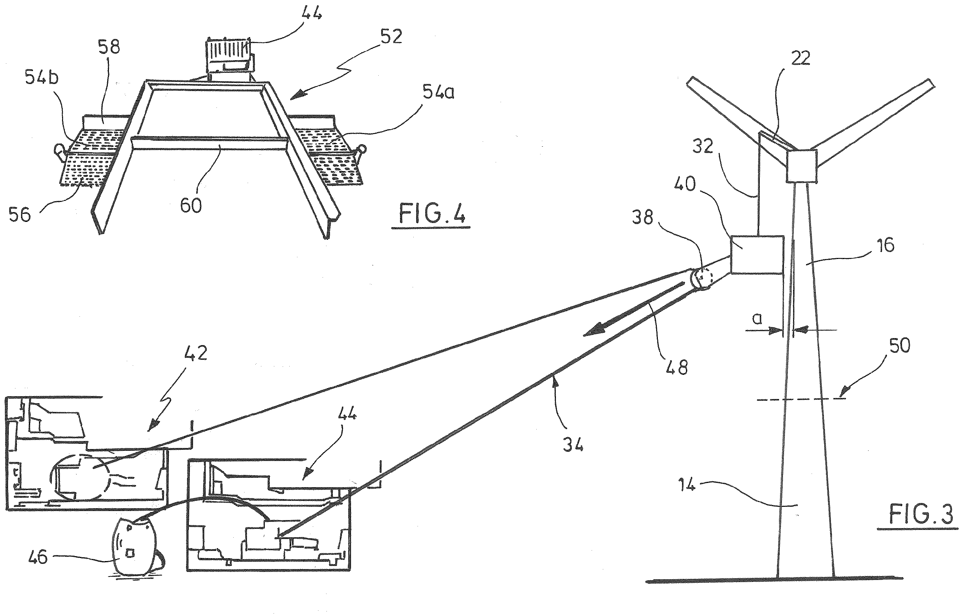

In Fig. 2 sind die geometrischen Verhältnisse an einer Windenergieanlage 10 und insbesondere an der dargestellten Windenergieanlage 10 mit Hybridturm schematisch verdeutlicht. Zu erkennen ist in der Draufsicht von oben, die Längsachse 28 des Turms 12, um die die Gondel 18 drehbar gelagert ist. Über den Kranarm 22 kann die schematisch dargestellte Last 30 angehoben und abgesenkt werden. Fig. 2 zeigt mit einem dargestellten Ring 26 den Durchmesser des Fundamentkörpers, der, je nach Ausgestaltung der Windenergieanlage 10, unterirdisch angeordnet sein kann oder aus dem Boden vorstehen kann. Ebenfalls eingezeichnet ist der Durchmesser des unteren Turmabschnitts 14. Deutlich wird, dass der eingezeichnete Abstand a der Last 30 von der Längsachse 28 des Turms 12 nicht ausreicht, um die Last 30 ohne Berührung mit dem unteren Turmabschnitt 14 heben oder senken zu können. Eine solche Situation wäre erst dann gegeben, wenn der Abstand e Null ist oder negativ wird. Fig. 2 zeigt auch, dass es bei der vorliegenden Betrachtung nicht auf den Schwerpunkt der Last 30, also den Abstand a, für das Anheben ankommt, sondern dass der Abstand d, also der zum Turm 12 hin vorstehende Teil der Last 30, mit zu berücksichtigen ist. Sofern die Last 30 nicht, wie in dem dargestellten Beispiel, kreissymmetrisch ist, ist die maximale Ausdehnung von d bei der ungünstigsten Orientierung der Last 30 zu bestimmen. Das Anheben der Last erfolgt in dem gezeigten Beispiel mit Hilfe einer Umlenkrolle 38 (vgl. Fig 3). Wenn die Orientierung der Last 30 durch Anbringen einer Umlenkrolle festgelegt werden kann, so sollte die Last 30 so orientiert werden, dass die Ausdehnung d minimal ist.

Fig. 1 zeigt ferner, wie über den Kran 22 mit einem Hubseil 32 ein Leitseil 34 in die Gondel 18 hochgezogen wird. Zur Verbindung von Hubseil 32 und Leitseil 34 ist ein Verbindungskörper 36 vorgesehen, der mit hochgezogen wird. Der Verbindungskörper 36 kann beispielsweise eine Umlenkrolle 38 beinhalten. Der Verbindungskörper 36 umfasst zusätzlich zu der Umlenkrolle 38 beispielsweise noch einen Schäkel und einen Lastwirbelbock, die für eine Montage an der abzusenkenden Last 30 vorgesehen sind. Für die Montage des Lastwirbelbocks an der Last 30 ist ein weiteres Anschlagmittel vorgesehen.

Fig. 3 zeigt, wie eine Last 40, beispielsweise ein Getriebe, über den Kran 22 mit einem Hubseil 32 abgesenkt wird. Im oberen Turmabschnitt 16 besitzt die Last 40 einen ausreichenden Abstand a von der Außenwand des Turms. An der Last 40 ist eine Umlenkrolle 38 befestigt, durch die das Leitseil 34 geführt ist. Das Leitseil 34 ist mit einem Ende an einem Fixiermittel 42 befestigt. Das andere Ende des Leitseils 34 wird über eine motorische Winde 44 geführt. Die motorische Winde 44 ist mit einer Kraftmesseinrichtung ausgebildet, die eine an dem Leitseil 34 aufgebrachte Zugkraft 48 misst. Die Kraftmessung kann mit der motorischen Winde 44 selbst, beispielsweise über ein an dieser angreifendes Drehmoment, erfolgen oder sie erfolgt als Messung der Zugkraft 48 an der motorischen Winde 44. Hierbei kann beispielsweise die Kraft zwischen der motorischen Winde 44 und ihrer Verankerung gemessen werden. Wenn die motorische Winde 44 über einen hydraulischen Motor betrieben wird, kann eine Messung der Zugkraft 48 am Leitseil 34 auch über eine Druckmessung erfolgen.

In Fig. 3 ist ein Seilsack 46 dargestellt, in dem das Leitseil 34 transportiert und aufbewahrt werden kann. Das Leitseil 34 läuft durch die motorische Winde 44 und wird dann von Hand in den Seilsack 46 gestopft. Durch eine Betätigung der motorischen Winde 44 wird eine Zugkraft 48 ausgeübt. Da sich die Zugkraft 48 im Wesentlichen in Richtung der beiden Stränge des Leitseils 34 erstreckt, ist die aufgebrachte Zugkraft 48 bereits so ausgerichtet, dass sie die Last 40, bezogen auf die Längsachse des Turms, auslenkt und in eine schräge Position zieht. Die auslenkende Gesamtkraft ist durch die Umlenkrolle 38 doppelt so groß wie die von der motorischen Winde 44 aufgebrachte Zugkraft 48.

Wird die Last 40 über das Hubseil 32 weiter als die Freihubhöhe 50 abgesenkt, so kollidiert sie mit der Außenwand des Turms im unteren Turmabschnitt 14. In diesem Fall muss durch eine erhöhte Zuggeschwindigkeit und/oder Zugkraft auf das Leitseil 34 mit Hilfe der motorischen Winde 44 der Abstand a von der Außenwand des Turms eingehalten werden.

Figur 4 zeigt einen ersten Rahmen 52, an dem die motorische Winde 44 angebracht ist. Der erste Rahmen 52 weist einen U-förmigen Profilrahmen auf, an dessen Schenkeln außenliegend zwei Radplattformen 54a, 54b angebracht sind. Die Radplattformen 54 besitzen eine Auffahrrampe 56 und eine Überfahrsperre 58, die aus einem hochgebogenen Metallblech gebildet ist. Zwischen den beiden Radplattformen 54a, 54b ist eine Querstrebe 60 zur Versteifung des Rahmens 52 vorgesehen. Für den praktischen Einsatz kann der Rahmen 52 in eine gewünschte Position gebracht werden und über ein darauf abgestelltes Kraftfahrzeug 62 in dieser Position gesichert werden.

Der zweite Rahmen 42 kann ähnlich zu dem ersten Rahmen 52 ausgebildet sein. Statt einer motorischen Winde 44 besitzt der zweite Rahmen 42 dann eine Öse oder ein anderes Befestigungsmittel für das Leitseil 34.

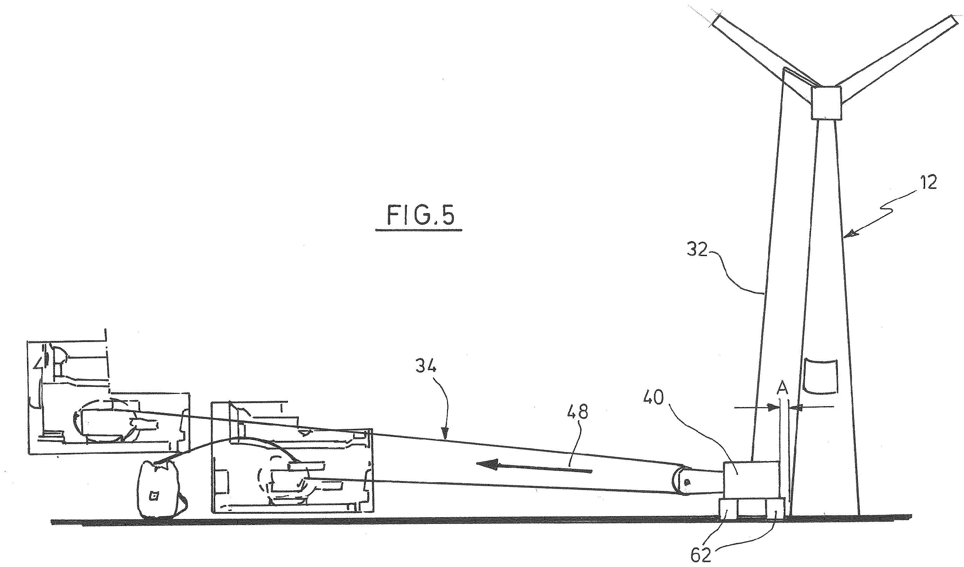

Figur 5 zeigt die vollständig abgesenkte Last 40, die über den Böcken 62 in einem Abstand A vom Turm 12 positioniert ist. Über die Zugkraft 48 ist hierbei sichergestellt, dass die Last 40 einen ausreichenden Abstand a zur Außenwand des Turms 12 besitzt und sicher auf den Böcken 32 aufsetzt.

### Bezugszeichenliste

- 10: Windenergieanlage
- 12: Turm
- 14: unterer Turmabschnitt
- 16: oberer Turmabschnitt
- 18: Gondel
- 20: Rotorblätter
- 22: Kranarm
- 24: Rotornabe
- 26: Ring
- 28: Längsachse
- 30: Last
- 32: Hubseil
- 34: Leitseil
- 36: Verbindungskörper
- 38: Umlenkrolle
- 40: Last
- 42: zweiter Rahmen
- 44: motorische Winde
- 48: Zugkraft
- 50: Freihubhöhe
- 52: erster Rahmen
- 54a,b: Radplattformen
- 56: Auffahrrampe
- 58: Überfahrsperre
- 60: Querstrebe
- 62: Kraftfahrzeug

## Patentansprüche

1. System zum Anheben und Absenken von Lasten an einer Windenergieanlage (10), die einen Turm (12) und eine auf dem Turm (12) angeordnete Gondel (18) mit einem Kran (22) aufweist, wobei der Turm (12) bis zu einer Freihubhöhe (50) einen so großen Durchmesser besitzt, dass eine von dem Kran (22) lotrecht angehobene oder abgesenkte Last (30, 40) mit dem Turm (12) kollidiert, wobei eine Schrägzugeinrichtung vorgesehen ist, die ein geführtes Leitseil (34) und eine motorische Winde (44) für einen Strang des Leitseils (34) aufweist, wobei das Leitseil (34) ein oder zwei Stränge aufweist und das die motorische Winde (44) bei einem Betrieb des Krans (22) betrieben wird, um die Last (30, 40) über das Leitseil (34) in einer Höhe unterhalb der Freihubhöhe (50) aus ihrer lotrechten Position unterhalb des Krans (22) auszulenken, wobei eine erste Steuerung vorgesehen ist, die die motorische Winde (44) ansteuert, **dadurch gekennzeichnet, dass** die erste Steuerung die motorische Winde (44) abhängig von einem erfassten Abstandswert der Last (30, 40) zum Turm (12) und/oder abhängig von einem erfassten Höhenwert ansteuert, wobei ein Höhensensor vorgesehen ist, der den Höhenwert der Last (30, 40) über dem Grund erfasst, wobei abhängig von dem erfassten Höhenwert der Last (30, 40) eine erforderliche Auslenkung der Last (30, 40) aus der lotrechten Position berechnet wird und/oder ein Abstandssensor an der Last angebracht ist, der den Abstandswert der Last zur Außenwand des Turms erfasst.

2. System nach Anspruch 1, **dadurch gekennzeichnet, dass** eine an der Last (30, 40) befestigbare Umlenkrolle (38) vorgesehen ist, über die das Leitseil (34) an der Last (30, 40) geführt ist, wobei der eine Strang des Leitseils (34) zu der motorischen Winde (44) und ein weiterer Strang des Leitseils (34) zu einem Befestigungsmittel für den weiteren Strang des Leitseils (34) geführt ist.

3. System nach Anspruch 1 oder 2, **dadurch gekennzeichnet, dass** eine Kraftmesseinrichtung für das Leitseil (34) vorgesehen ist, die eine an dem Leitseil (34) wirkende Zugkraft (48) misst.

4. System nach Anspruch 3, **dadurch gekennzeichnet, dass** die Kraftmesseinrichtung die motorische Winde (44) für das Leitseil (34) entsprechend der gemessenen Zugkraft (48) ansteuert.

5. System nach Anspruch 3 oder 4, **dadurch gekennzeichnet, dass** unterhalb der Freihubhöhe (50) von der motorischen Winde (44) eine konstante Zugkraft (48) an dem Leitseil (34) wirkt.

6. System nach einem der vorangehenden Ansprüche, **dadurch gekennzeichnet, dass** von der motorischen Winde (44) eine Zugkraft (48) an dem Leitseil (34) aufgebracht wird, die abhängig ist von der Höhe der Last (30, 40) über dem Grund.

7. System nach einem der Ansprüche 1 bis 6, **dadurch gekennzeichnet, dass** die motorische Winde (44) an einem ersten Rahmen (52) vorgesehen ist, der in seiner Position relativ zu dem Turm (12) festlegt ist.

8. System nach Anspruch 7, **dadurch gekennzeichnet, dass** der erste Rahmen (52) eine U-Form oder eine Platte aufweist.

9. System nach Anspruch 8, **dadurch gekennzeichnet, dass** der erste Rahmen (52) mit Ballast, einer Ankereinrichtung und/oder einer Verbindung zu einer festen Struktur in seiner Position relativ zu dem Turm (12) angebracht ist.

10. System nach einem der Ansprüche 1 bis 9, **dadurch gekennzeichnet, dass** ein zweiter Rahmen (42) für das Leitseil (34) vorgesehen ist, wobei der zweite Rahmen (42) Befestigungsmittel für das Leitseil (34) aufweist.

11. System nach einem der Ansprüche 1 bis 10, **dadurch gekennzeichnet, dass** zusätzlich oder ausschließlich Bodenbefestigungsmittel für den oder die Rahmen (52, 42) vorgesehen sind.

12. System nach einem der Ansprüche 1 bis 11, **dadurch gekennzeichnet, dass** eine zweite Steuerung vorgesehen ist, die den Kran (22) ansteuert, wobei die zweite Steuerung des Krans (22) die Hebe- oder Senkgeschwindigkeit der Last (30, 40) erfasst.

13. System nach einem der Ansprüche 1 bis 12, **dadurch gekennzeichnet, dass** eine dritte Steuerung vorgesehen ist, wobei die dritte Steuerung der motorischen Winde (44) und/oder dem Kran (22) ein Steuersignal vorgibt.

14. Verfahren zum Anheben und Absenken von Lasten an einer Windenergieanlage (10), die einen Turm (12) und eine auf dem Turm (12) angeordnete Gondel (18) mit einem Kran (22) aufweist, wobei der Turm (12) bis zu einer Freihubhöhe (50) einen so großen Durchmesser besitzt, dass eine von dem Kran (22) lotrecht angehobene oder abgesenkte Last (30, 40) mit dem Turm (12) kollidiert, die Last (30, 40) über ein Leitseil (34) mit einer motorischen Winde (44) in einer Höhe unterhalb der Freihubhöhe (50) aus ihrer lotrechten Position unterhalb des Krans (22) ausgelenkt wird, wobei ein Strang des Leitseils (34) an der motorischen Winde (44) angeordnet ist, wobei eine erste Steuerung zur Ansteuerung der motorischen Winde vorgesehen ist,
**dadurch gekennzeichnet, dass** die motorische Winde (44) abhängig von einem erfassten Abstandswert der Last (30, 40) zum Turm (12) und/oder abhängig von einem erfassten Höhenwert ansteuert, ferner sind folgende Messeinrichtungen vorgesehen:
- ein Höhensensor, der den Höhenwert der Last (30, 40) über dem Grund erfasst und/oder
- ein an der Last angebrachter Abstandssensor, der den Abstandswert der Last zur Außenwand des Turms erfasst.

15. Verfahren nach Anspruch 14, **dadurch gekennzeichnet, dass** eine Kraftmesseinrichtung für das Leitseil (34) vorgesehen ist, die eine an dem Leitseil (34) wirkende Zugkraft (48) misst.

16. Verfahren nach Anspruch 15, **dadurch gekennzeichnet, dass** die motorische Winde (44) entsprechend der erfassten Zugkraft (48) an dem Leitseil (34) angesteuert wird, um unterhalb der Freihubhöhe (50) eine konstante Zugkraft (48) an dem Leitseil (34) aufzubringen.

## Claims

1. A system for lifting and lowering loads on a wind turbine (10) which has a tower (12) and a nacelle (18) arranged on the tower (12) with a crane (22), wherein the tower (12) has such a large diameter up to a free-lift height (50) that a load (30, 40) lifted or lowered perpendicularly by the crane (22) collides with the tower (12), wherein a diagonal pulling apparatus is provided, which has a guided tag line (34) and a motorized winch (44) for one rope of the tag line (34), wherein the tag line (34) has one or two ropes and the motorized winch (44) is operated when the crane (22) is operated in order to deflect the load (30, 40) from its perpendicular position below the crane (22) via the tag line (34) at a height below the free-lift height (50), wherein a first control is provided, which actuates the motorized winch (44), **characterized in that** the first control actuates the motorized winch (44) depending on a detected distance value of the load (30, 40) from the tower (12) and/or depending on a detected height value, wherein a height sensor is provided, which detects the height value of the load (30, 40) above the ground, wherein, depending on the detected height value of the load (30, 40), a required deflection of the load (30, 40) from the perpendicular position is calculated, and/or a distance sensor is mounted on the load, which detects the distance value of the load from the outer wall of the tower.

2. The system according to Claim 1, **characterized in that** a deflection pulley (38) which can be fastened to the load (30, 40) is provided, via which the tag line (34) is guided on the load (30, 40), wherein the one rope of the tag line (34) is guided to the motorized winch (44) and a further rope of the tag line (34) is guided to a fastening means for the further rope of the tag line (34).

3. The system according to Claim 1 or 2, **characterized in that** a force-measuring apparatus is provided for the tag line (34), which measures a traction force (48) acting on the tag line (34).

4. The system according to Claim 3, **characterized in that** the force-measuring apparatus actuates the motorized winch (44) for the tag line (34) in accordance with the measured traction force (48).

5. The system according to Claim 3 or 4, **characterized in that** a constant traction force (48) acts on the tag line (34) below the free-lift height (50) from the motorized winch (44).

6. The system according to any one of the preceding claims, **characterized in that** a traction force (48) is applied to the tag line (34) by the motorized winch (44), which is dependent on the height of the load (30, 40) above the ground.

7. The system according to any one of Claims 1 to 6, **characterized in that** the motorized winch (44) is provided on a first frame (52) which is fixed in its position relative to the tower (12).

8. The system according to Claim 7, **characterized in that** the first frame (52) has a U-shape or a plate.

9. The system according to Claim 8, **characterized in that** the first frame (52) is mounted in its position relative to the tower (12) with ballast, an anchoring apparatus and/or a connection to a fixed structure.

10. The system according to any one of Claims 1 to 9, **characterized in that** a second frame (42) is provided for the tag line (34), wherein the second frame (42) has fastening means for the tag line (34).

11. The system according to any one of Claims 1 to 10, **characterized in that** floor fastening means are additionally or exclusively provided for the frame or frames (52, 42).

12. The system according to any one of Claims 1 to 11, **characterized in that** a second control is provided, which actuates the crane (22), wherein the second control of the crane (22) detects the lifting or lowering speed of the load (30, 40).

13. The system according to any one of Claims 1 to 12, **characterized in that** a third control is provided, wherein the third control specifies a control signal for the motorized winch (44) and/or the crane (22).

14. A method for lifting and lowering loads on a wind turbine (10) which has a tower (12) and a nacelle (18) arranged on the tower (12) with a crane (22), wherein the tower (12) has such a large diameter up to a free-lift height (50) that a load (30, 40) lifted or lowered perpendicularly by the crane (22) collides with the tower (12), the load (30, 40) is deflected from its perpendicular position below the crane (22) via a tag line (34) with a motorized winch (44) at a height below the free-lift height (50), wherein a rope of the tag line (34) is arranged on the motorized winch (44), wherein a first control is provided for actuating the motorized winch, **characterized in that** the motorized winch (44) actuates, depending on a detected distance value of the load (30, 40) from the tower (12) and/or depending on a detected height value, furthermore the following measuring apparatuses are provided:
- a height sensor which detects the height value of the load (30, 40) above the ground, and/or
- a distance sensor mounted on the load, which detects the distance value of the load from the outer wall of the tower.

15. The method according to Claim 14, **characterized in that** a force-measuring apparatus is provided for the tag line (34), which measures a traction force (48) acting on the tag line (34).

16. The method according to Claim 15, **characterized in that** the motorized winch (44) is actuated in accordance with the detected traction force (48) on the tag line (34) in order to apply a constant traction force (48) to the tag line (34) below the free-lift height (50).

## Revendications

1. Système de levage et d'abaissement des charges sur une éolienne (10), laquelle présente une tour (12) et une nacelle (18) disposée sur la tour (12) avec une grue (22), dans lequel la tour (12) possède un diamètre d'une telle taille jusqu'à une hauteur de levée libre (50), qu'une charge (30, 40) levée ou abaissée verticalement par la grue (22) entre en collision avec la tour (12), dans lequel il est prévu un dispositif de traction oblique, lequel présente un câble de guidage mené (34) et un treuil motorisé (44) pour un brin du câble de guidage (34), dans lequel le câble de guidage (34) présente un ou deux brins et le treuil motorisé (44) fonctionne pendant un fonctionnement de la grue (22), afin de faire dévier la charge (30, 40) hors de sa position verticale sous la grue (22) par le biais du câble de guidage (34) à une hauteur inférieure à la hauteur de levée libre (50), dans lequel il est prévu une première commande destinée à actionner le treuil motorisé (44), **caractérisé en ce que** la première commande actionne le treuil motorisé (44) en fonction d'une valeur de distance détectée de la charge (30, 40) par rapport à la tour (12) et/ou en fonction d'une valeur de hauteur détectée, dans lequel il est prévu un capteur de hauteur, lequel détecte la valeur de hauteur de la charge (30, 40) au-dessus du sol, dans lequel, en fonction de la valeur de hauteur détectée de la charge (30, 40), une déviation requise de la charge (30, 40) hors de la position verticale est calculée et/ou un capteur de distance est fixé à la charge, lequel détecte la valeur de distance de la charge par rapport à la paroi extérieure de la tour.

2. Système selon la revendication 1, **caractérisé en ce qu'**il est prévu un rouleau de déviation (38) apte à être fixé à la charge (30, 40), par le biais duquel le câble de guidage (34) est mené sur la charge (30, 40), dans lequel ledit brin du câble de guidage (34) est mené vers le treuil motorisé (44) et un autre brin du câble de guidage (34) est mené vers un moyen de fixation pour l'autre brin du câble de guidage (34).

3. Système selon la revendication 1 ou 2, **caractérisé en ce qu'**il est prévu un dispositif de mesure de force pour le câble de guidage (34), lequel mesure une force de traction (48) agissant sur le câble de guidage (34).

4. Système selon la revendication 3, **caractérisé en ce que** le dispositif de mesure de force actionne le treuil motorisé (44) pour le câble de guidage (34) en fonction de la force de traction (48) mesurée.

5. Système selon la revendication 3 ou 4, **caractérisé en ce qu'**une force de traction (48) constante agit sur le câble de guidage (34) sous la hauteur de levée libre (50) depuis le treuil motorisé (44).

6. Système selon l'une des revendications précédentes, **caractérisé en ce qu'**une force de traction (48) est appliquée au câble de guidage (34) depuis le treuil motorisé (44), laquelle dépend de la hauteur de la charge (30, 40) au-dessus du sol.

7. Système selon l'une des revendications 1 à 6, **caractérisé en ce que** le treuil motorisé (44) est prévu sur un premier cadre (52), lequel est fixé dans sa position par rapport à la tour (12).

8. Système selon la revendication 7, **caractérisé en ce que** le premier cadre (52) présente une forme en U ou une plaque.

9. Système selon la revendication 8, **caractérisé en ce que** le premier cadre (52) est fixé dans sa position par rapport à la tour (12) avec lest, un dispositif d'ancrage et/ou un assemblage avec une structure fixe.

10. Système selon l'une des revendications 1 à 9, **caractérisé en ce qu'**il est prévu un deuxième cadre (42) pour le câble de guidage (34), dans lequel le deuxième cadre (42) présente des moyens de fixation pour le câble de guidage (34).

11. Système selon l'une des revendications 1 à 10, **caractérisé en ce que** des moyens de fixation au sol sont prévus en complément ou exclusivement pour le ou les cadre(s) (52, 42).

12. Système selon l'une des revendications 1 à 11, **caractérisé en ce qu'**il est prévu une deuxième commande destinée à actionner la grue (22), dans lequel la deuxième commande de la grue (22) détecte la vitesse de lavage ou d'abaissement de la charge (30, 40).

13. Système selon l'une des revendications 1 à 12, **caractérisé en ce qu'**il est prévu une troisième commande, dans lequel la troisième commande fournit un signal de commande au treuil motorisé (44) et/ou à la grue (22).

14. Procédé de levage et d'abaissement de charges sur une éolienne (10), laquelle présente une tour (12) et une nacelle (18) disposée sur la tour (12) avec une grue (22), dans lequel la tour (12) possède un diamètre d'une telle taille jusqu'à une hauteur de levée libre (50), qu'une charge (30, 40) levée ou abaissée verticalement par la grue (22) entre en collision avec la tour (12), la charge (30, 40) est déviée hors de sa position verticale sous la grue (22) par le biais d'un câble de guidage (34) avec un treuil motorisé (44) à une hauteur inférieure à la hauteur de levée libre (50), dans lequel un brin du câble de guidage (34) est disposé sur le treuil motorisé (44), dans lequel il est prévu une première commande pour l'actionnement du treuil motorisé,
**caractérisé en ce que** le treuil motorisé (44) est actionné en fonction d'une valeur de distance détectée de la charge (30, 40) par rapport à la tour (12) et/ou en fonction d'une valeur de hauteur détectée, les dispositifs de mesure suivants étant également prévus :
un capteur de hauteur, lequel détecte la valeur de hauteur de la charge (30, 40) au-dessus du sol et/ou
un capteur de distance est fixé à la charge, lequel détecte la valeur de distance de la charge par rapport à la paroi extérieure de la tour.

15. Procédé selon la revendication 14, **caractérisé en ce qu'**il est prévu un dispositif de mesure de force pour le câble de guidage (34), lequel mesure une force de traction (48) agissant sur le câble de guidage (34).

16. Procédé selon la revendication 15, **caractérisé en ce que** le treuil motorisé (44) est actionné en fonction de la force de traction (48) détectée sur le câble de guidage (34), afin d'appliquer une force de traction (48) constante sur le câble de guidage (34) sous la hauteur de levée libre (50).
